# EUROPEAN PATENT APPLICATION

(11) **EP 4 459 906 A1**
(43) Date of publication of application: **06.11.2024**
(21) Application number: 22914656.8
(22) Date of filing: 26.12.2022
(51) Int. Cl.: H04L 1/00, H04B 7/22

(54) **COMMUNICATION METHOD AND APPARATUS, AND TERMINAL, NETWORK SIDE DEVICE AND MEDIUM**

(30) Priority: 27.12.2021 CN 202111619668
(71) Applicant: VIVO MOBILE COMMUNICATION CO., LTD., Dongguan, Guangdong 523863 (CN)
(72) Inventor: JIANG, Dajie, Dongguan, Guangdong 523863 (CN); HUANG, Wei, Dongguan, Guangdong 523863 (CN)
(74) Representative: Murgitroyd & Company
(86) International application number: PCT/CN2022/141900
(87) International publication number: WO 2023/125402

(57) **Abstract**

This application discloses a communication method and apparatus, a terminal, a network side device, and a medium. The communication method in embodiments of this application includes: UE receives a first signal from a first device, and receives a BSC signal from a BSC device. The BSC signal is obtained in a case that the BSC device modulates the first signal. The UE obtains target bits based on the first signal and the BSC signal. The target bits are respectively carried on the first signal and the BSC signal.

## Description

### CROSS-REFERENCE TO RELATED APPLICATION

This application claims priority to Chinese Patent Application No. 202111619668.0, filed with the China National Intellectual Property Administration on December 27, 2021 and entitled "COMMUNICATION METHOD AND APPARATUS, TERMINAL, NETWORK SIDE DEVICE, AND MEDIUM", which is incorporated herein by reference in its entirety.

### TECHNICAL FIELD

This application belongs to the field of communication technology, and specifically, relates to a communication method and apparatus, a terminal, a network side device, and a medium.

### BACKGROUND

Currently, when a communication device (such as a network side device) transmits information to user equipment (User Equipment, UE), the network side device may modulate the information on a radio frequency signal, and send the radio frequency signal to the UE, to transmit the information to the UE through the radio frequency signal. Therefore, the UE may demodulate the radio frequency signal, to obtain the information.

However, because a transmission bandwidth of the radio frequency signal is fixed, information transmission efficiency is low.

### SUMMARY

Embodiments of this application provide a communication method and apparatus, a terminal, a network side device, and a medium. This can solve a problem of low information transmission efficiency.

According to a first aspect, a communication method is provided. The method includes the following steps: UE receive a first signal from a first device, and receive a BSC signal from a BSC device. The BSC signal is obtained in a case that the BSC device modulates the first signal. The UE obtains target bits based on the first signal and the BSC signal. The target bits are respectively carried on the first signal and the BSC signal.

According to a second aspect, a communication apparatus is provided. The communication apparatus is a first communication apparatus. The first communication apparatus includes a receiving module and a processing module. The receiving module is configured to: receive a first signal from a second communication apparatus, and receive a BSC signal from a third communication apparatus. The BSC signal is obtained in a case that the third communication apparatus modulates the first signal. The processing module is configured to obtain target bits based on the first signal and the BSC signal received by the receiving module. The target bits are respectively carried on the first signal and the BSC signal.

According to a third aspect, a communication method is provided. The method includes the following steps: A first device sends a first signal to UE. The first signal is used by the UE to obtain target bits. The target bits are respectively carried on the first signal and the BSC signal. The BSC signal is obtained in a case that a BSC device modulates the first signal.

According to a fourth aspect, a communication apparatus is provided. The communication apparatus is a second communication apparatus. The second communication apparatus includes a sending module. The sending module is configured to send a first signal to a first communication apparatus. The first signal is used by the first communication apparatus to obtain target bits. The target bits are carried on the first signal and a BSC signal respectively. The BSC signal is obtained in a case that the second communication apparatus modulates the first signal.

According to a fifth aspect, a communication method is provided. The method includes the following steps: A BSC device sends a BSC signal to UE. The BSC signal is used by the UE to obtain target bits. The target bits are carried on a first signal and the BSC signal respectively. The first signal is a signal sent by a first device to the UE. The BSC signal is obtained in a case that the BSC device modulates the first signal.

According to a sixth aspect, a communication apparatus is provided. The communication apparatus is a third communication apparatus. The third communication apparatus includes a sending module. The sending module is configured to send a BSC signal to a first communication apparatus. The BSC signal is used by the first communication apparatus to obtain target bits. The target bits are carried on a first signal and the BSC signal respectively. The first signal is a signal sent by the first communication apparatus to a second communication apparatus. The BSC signal is obtained in a case that the third communication apparatus modulates the first signal.

According to a seventh aspect, a terminal is provided. The terminal includes a processor and a memory. The memory stores a program or instructions executable on the processor. When the program and the instructions are executed by the processor, steps of the method according to the first aspect are implemented, or steps of the method according to the fifth aspect are implemented.

According to an eighth aspect, a terminal is provided, including a processor and a communication interface. The communication interface is configured to: receive a first signal from a first device, and receive a BSC signal from a BSC device. The BSC signal is obtained in a case that the BSC device modulates the first signal. The processor is configured to obtain target bits based on the first signal and the BSC signal. The target bits are respectively carried on the first signal and the BSC signal.

According to a ninth aspect, a terminal is provided, including a processor and a communication interface. The communication interface is configured to send a BSC signal to UE. The BSC signal is used by the UE to obtain target bits. The target bits are carried on a first signal and the BSC signal respectively. The first signal is a signal sent by a first device to the UE. The BSC signal is obtained in a case that a terminal modulates the first signal.

According to a tenth aspect, a network side device is provided. The network side device includes a processor and a memory. The memory stores a program or instructions executable on the processor. When the program and the instructions are executed by the processor, steps of the method according to the third aspect are implemented.

According to an eleventh, a network side device is provided, including a processor and a communication interface. The communication interface is configured to send a first signal to UE. The first signal is used by the UE to obtain target bits. The target bits are carried on the first signal and a BSC signal respectively. The BSC signal is obtained in a case that a BSC device modulates the first signal.

According to a twelfth aspect, a communication system is provided, including a terminal and a network side device. The terminal is configured to perform steps of the method according to the first aspect, or steps of the method according to the fifth aspect. The network side device is configured to perform steps of the method according to the third aspect.

According to a thirteenth aspect, a readable storage medium is provided. The readable storage medium stores a program or instructions. When the program or the instructions are executed by the processor, steps of the method according to the first aspect are implemented, or steps of the method according to the third aspect are implemented, or steps of the method according to the fifth aspect are implemented.

According to a fourteenth aspect, a chip is provided. The chip includes a processor and a communication interface. The communication interface is coupled to the processor. The processor is configured to run a program or instructions, to implement steps of the method according to the first aspect, or to implement steps of the method according to the third aspect, or to implement steps of the method according to the fifth aspect.

According to a fifteenth aspect, a computer program product is provided. The computer program product is stored in a storage medium. The computer program product is executed by at least one processor, to implement steps of the method according to the first aspect, or to implement steps of the method according to the third aspect, or to implement steps of the method according to the fifth aspect.

In embodiments of this application, UE may receive a first signal and a BSC signal (the BSC signal is obtained in a case that a BSC device modulates the first signal) from a first device and the BSC device respectively. Therefore, the UE may obtain target bits respectively carried on the first signal and the BSC signal based on the first signal and the BSC signal. When information (that is, the target bits) is transmitted to the UE, the target bits are respectively carried on the first signal and the BSC signal that is obtained by modulating the first signal. That is, a part of the target bits is carried on the first signal, and not all of the target bits are carried on the first signal. Therefore, time of transmitting the part of bits by the first signal may be reduced, to reduce time of transmitting the target bits. In this way, information transmission efficiency can be improved.

### BRIEF DESCRIPTION OF THE DRAWINGS

FIG. 1 is a block diagram of a wireless communication system according to an embodiment of this application;
FIG. 2 is a schematic flowchart 1 of a communication method according to an embodiment of this application;
FIG. 3 is a schematic diagram in which a BSC device modulates another part of target bits on a first signal according to an embodiment of this application;
FIG. 4 is a schematic flowchart 2 of a communication method according to an embodiment of this application;
FIG. 5 is a schematic flowchart in which a first device splits target bits according to an embodiment of this application;
FIG. 6 is a schematic flowchart 3 of a communication method according to an embodiment of this application;
FIG. 7 is a schematic diagram 1 of a structure of a communication apparatus according to an embodiment of this application;
FIG. 8 is a schematic diagram 2 of a structure of a communication apparatus according to an embodiment of this application;
FIG. 9 is a schematic diagram 3 of a structure of a communication apparatus according to an embodiment of this application;
FIG. 10 is a schematic diagram of a structure of a communication device according to an embodiment of this application;
FIG. 11 is a schematic diagram of a hardware structure of a terminal according to an embodiment of this application; and
FIG. 12 is a schematic diagram of a hardware structure of a network side device according to an embodiment of this application.

### DETAILED DESCRIPTION

The following clearly describes the technical solutions in embodiments of this application with reference to the accompanying drawings in embodiments of this application. It is clear that, the described embodiments are some of embodiments of this application rather than all of the embodiments. All other embodiments obtained by a person of ordinary skill in the art based on embodiments of this application shall fall within the protection scope of this application.

Terms involved embodiments of this application are described below.

### 1. Backscatter communication (BackScatter Communication, BSC)

BSC is a process that a BSC device performs modulation through a radio frequency signal that is sent by another device (such as UE, and a network side device) or that is in the environment and carries data information of the BSC device on the radio frequency signal.

The BSC device may control a reflection coefficient of a circuit of the BSC device by adjusting internal impedance of the BSC device, to change an amplitude, a frequency, a phase, and the like of the radio frequency signal to achieve modulation of the radio frequency signal.

The BSC device may be a tag (Tag) in a radio frequency identification (Radio Frequency Identification, RFID) system, or a passive (Passive) internet of things (Internet of Things, IOT) unit, or an active IOT unit, or a reconfigurable intelligent surface (Reconfigurable Intelligent Surface, RIS) unit, or the like.

### 2. backscatter communication (BSC) signal

The BSC signal is a signal generated after the BSC device modulates the radio frequency signal, that is, a BSC signal associated with the radio frequency signal.

### 3. Other terms

The terms "first", "second", and the like in the specification and claims of this application are used to distinguish between similar objects, but are not used to describe a specific sequence or order. It may be understood that the terms used in such a way are interchangeable in proper circumstances, so that the embodiments of this application can be implemented in sequences other than the sequence illustrated or described herein. Objects distinguished by using "first" and "second" are generally of one class, and a quantity of the objects are not limited. For example, there may be one or more first devices. In addition, "and/or" in the specification and the claims represents at least one of connected objects, and the character "/" generally represents an "or" relationship between associated objects.

It is worth noting that, the technologies described in embodiments of this application are not limited to a long term evolution (Long Term Evolution, LTE)/LTE-advanced (LTE-Advanced, LTE-A) system, and may be further applied to other wireless communication systems, for example, a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access. OFDMA) system, a single-carrier frequency division multiple access (Single-carrier Frequency Division Multiple Access, SC-FDMA) system, and other systems. The terms "system" and "network" in embodiments of this application may usually be used interchangeably. The technology described in embodiments of this application can be applied to the systems and radio technologies mentioned above, and can also be applied to other systems and radio technologies. The following describes a new radio (New Radio, NR) system for example, and NR terms are used in most of the following descriptions. However, these technologies may alternatively be applied to an application in a system other than the NR system, for example, a 6th generation (6th Generation, 6G) system.

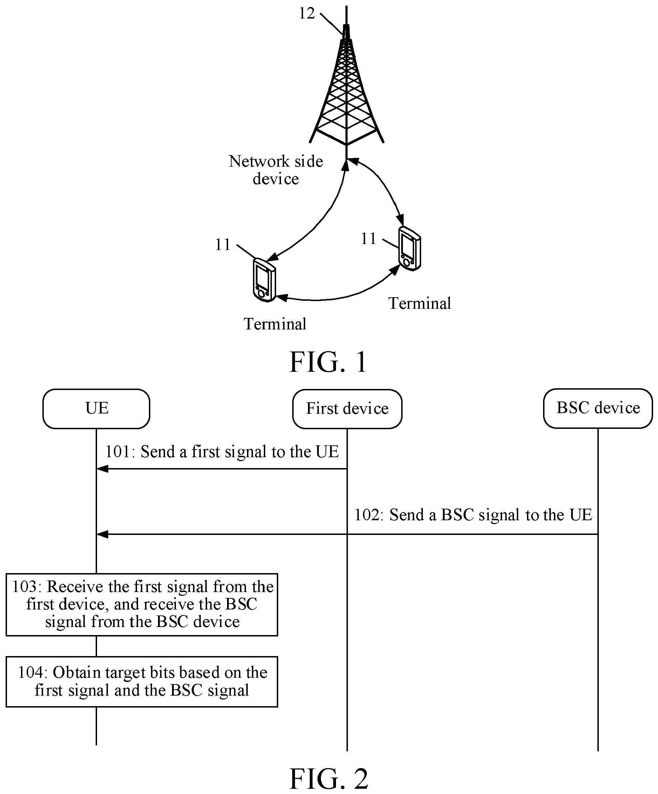

FIG. 1 is a block diagram of a wireless communication system to which an embodiment of this application is applicable. The wireless communication system includes a terminal 11 and a network side device 12. The terminal 11 may be a mobile phone, a tablet computer (Tablet Personal Computer), a laptop computer (Laptop Computer) or notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR) device/a virtual reality (virtual reality, VR) device, a robot, a wearable device (Wearable Device), a vehicle user equipment (Vehicle User Equipment, VUE), a pedestrian terminal (Pedestrian User Equipment, PUE), a smart home (a home appliance having a wireless communication function, for example, a refrigerator, a television, a washing machine, or furniture), a game console, a personal computer (personal computer, PC), a terminal side device such as a teller machines or a self-service machine. The wearable device includes a smart watch, a smart bracelet, a smart headphone, smart glasses, smart jewelry (a smart ring, a smart necklace, and a smart anklet), a smart wristband, smart clothes, and the like. It should be noted that the specific type of the terminal 11 is not limited the embodiments of this application. The network side device 12 may include an access network device or a core network device. The access network device may also be referred to as a radio access network device, a radio access network (Radio Access Network, RAN), a radio access network function, or a radio access network unit. The access network device may include a base station, a wireless local area network (Wireless Local Area Network, WLAN) access point, a wireless fidelity (Wireless Fidelity, WiFi) node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission reception point (transmission reception Point, TRP), or other proper terms in the field. The base station is not limited to a specific technical term, provided that the same technical effect is achieved. It should be noted that, in embodiments of this application, only the base station in the NR system is taken as an example for introduction, and a specific type of the base station is not limited.

With reference to the accompanying drawings, the following provides detailed descriptions of a communication method and apparatus, a terminal, a network side device and a medium provided in embodiments of this application by using some embodiments and application scenarios.

FIG. 2 is a flowchart of a communication method according to an embodiment of this application. As shown in FIG. 2, the communication method provided by this embodiment of this application may include the following step 101 to step 104.

Step 101: A first device sends a first signal to UE.

In this embodiment of this application, the first signal is used by the UE to obtain target bits. The target bits are carried on the first signal and a BSC signal respectively. The BSC signal is obtained in a case that a BSC device modulates the first signal.

Optionally, in this embodiment of this application, the first device includes any one of the following: a base station, the BSC device, and other UE.

Further, optionally, in this embodiment of this application, in a case that the first device is the base station, the base station may be any one of the following: other UE, a relay (relay) device, a device to device (Device to Device, D2D) device, a sidelink (sidelink) device, and the like.

Further, optionally, in this embodiment of this application, in a case that the first device is the BSC device, the BSC device may alternatively be an RIS device, where a power supply source and a radio frequency source (such as the first signal) of the BSC device may be a same device or may be different devices.

A power supply manner of the BSC device may include at least one of the following: the BSC device is powered by a base station radio frequency signal, the BSC device is powered by another radio frequency signal, and the BSC device is powered by a non-radio frequency signal. Functions of the non-radio frequency signal may include at least one of a mechanical power supply, a vibration power supply, a solar power supply, a thermal power supply, and the like.

In this embodiment of this application, in a case that another communication device (such as a second device in the following embodiments) transmits the target bits to the UE, the first device may send the first signal to the UE. The communication device may include at least one of the following: the base station, the BSC device, other UE, and the like.

Step 102: The BSC device sends the BSC signal to the UE.

It may be understood that, the BSC signal is a BSC signal associated with the first signal.

In this embodiment of this application, the BSC signal is used by the UE to obtain the target bits. The target bits are respectively carried on the first signal and the BSC signal. The first signal is a signal sent by the first device to the UE. The BSC signal is obtained in a case that the BSC device modulates the first signal.

Optionally, in this embodiment of this application, the first device may modulate a part of the target bits on the first signal, and send the first signal to the UE. In addition, the BSC device may modulate another part of the target bits on the first signal in a backscatter (backscatter) manner, to generate the BSC signal. Therefore, the BSC device may send the BSC signal to the UE, so that the UE can obtain the part of bits and the another part of bits, to obtain the target bits.

Further, optionally, in this embodiment of this application, the BSC device may modulate the another part of the target bits on the first signal in a manner that is based on FMO coding, to generate the BSC signal.

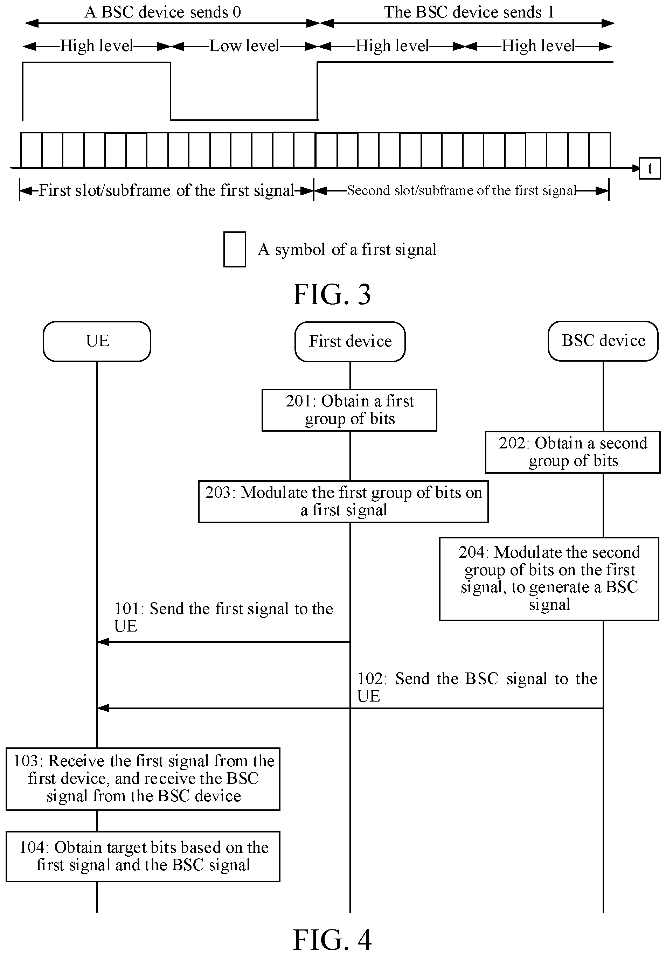

For example, FIG. 3 is a schematic diagram in which a BSC device modulates another part of target bits on a first signal according to an embodiment of this application. As shown in FIG. 3, the BSC device may modulate the another part of bits on the first signal in an amplitude shift keying (Amplitude Shift Keying, ASK) manner that is based on FMO coding, to generate a BSC signal.

Two different examples are used below to describe how the first device and the BSC device send the signal.

### Example 1:

The first device may modulate, on the first signal, a part (for example, a first group of bits in the following embodiments) of bits (for example, a first bit in the following embodiments) generated after channel coding of the target bits, and send the first signal to UE. In addition, the BSC device may modulate, on the first signal, another part (for example, a second group of bits in the following embodiments) of bits generated after channel coding of the target bits, to generate the BSC signal, and send the BSC signal to the UE.

Both the part of bits and the another part of bits are bits (information) after channel coding.

In this example, the first device may first obtain the part of bits, and then modulate the part of bits on the first signal. In addition, the BSC device may first obtain the another part of bits, and then modulate the another part of bits on the first signal, to generate the BSC signal.

For example, the first device may directly obtain the part of bits from the first device; or the first device may receive the part of bits from another communication device (for example, a second device of the following embodiments). The BSC device may obtain the another part of bits from the first device, or the BSC device may receive the another part of bits from the another communication device.

Specifically, the target bits include a first group of bits and a second group of bits. With reference to FIG. 2, as shown in FIG. 4, before step 101, the communication method provided by this embodiment of this application may further include the following step 201 to step 204.

Step 201: The first device obtains the first group of bits.

In this embodiment of this application, the first group of bits is obtained after a second device splits a first bit. The second device includes any one of the following: the first device and another device. The first bit is a bit generated after channel coding is performed on the target bits.

It may be understood that, the another device may specifically include at least one of the following: a base station, the BSC device, and other UE.

Step 202: The BSC device obtains the second group of bits.

In this embodiment of this application, the second group of bits is obtained after the second device splits the first bit. The second device includes any one of the following: the first device and another device. The first bit is a bit generated after channel coding is performed on the target bits.

Further, optionally, in this embodiment of this application, the second device may first perform channel coding on the target bits, to obtain the first bit, and then split the first bit into the first group of bits and the second group of bits. Therefore, the first device may obtain the first group of bits, and the BSC device may obtain the second group of bits.

It may be understood that, the first group of bits and the second group of bits are obtained by splitting encoded information of same source information.

In a case that the second device is the first device, the target bits may be information pre-stored in the first device (or information received from another device). Therefore, the first device may directly perform channel coding on the target bits, to obtain the first bit, and then the first device may obtain the first group of bits, and send the second group of bits to the BSC device.

In a case that the second device is the another device, the target bits may be information pre-stored in the another device (or information received from the another communication device). Therefore, the another device may perform channel coding on the target bits, to obtain the first bit. The another device may further send the first group of bits to the first device, and send the second group of bits to the BSC device, so that the first device can obtain the first group of bits, and the BSC device can obtain the second group of bits.

Specifically, the first group of bits and the second group of bits may be the same or different.

For example, assuming that the target bits are 100-bit information, the second device (for example, the another device) may perform channel coding on the target bits with a code rate of 0.5, to obtain the first bit (that is, 200-bit information). Therefore, the another device may split the 200-bit information into 180-bit information (that is, the first group of bits) and 20-bit information (that is, the second group of bits), that is, the first group of bits and the second group of bits are different, so that the first device can obtain the 180-bit information, and the BSC device can obtain the 20-bit information.

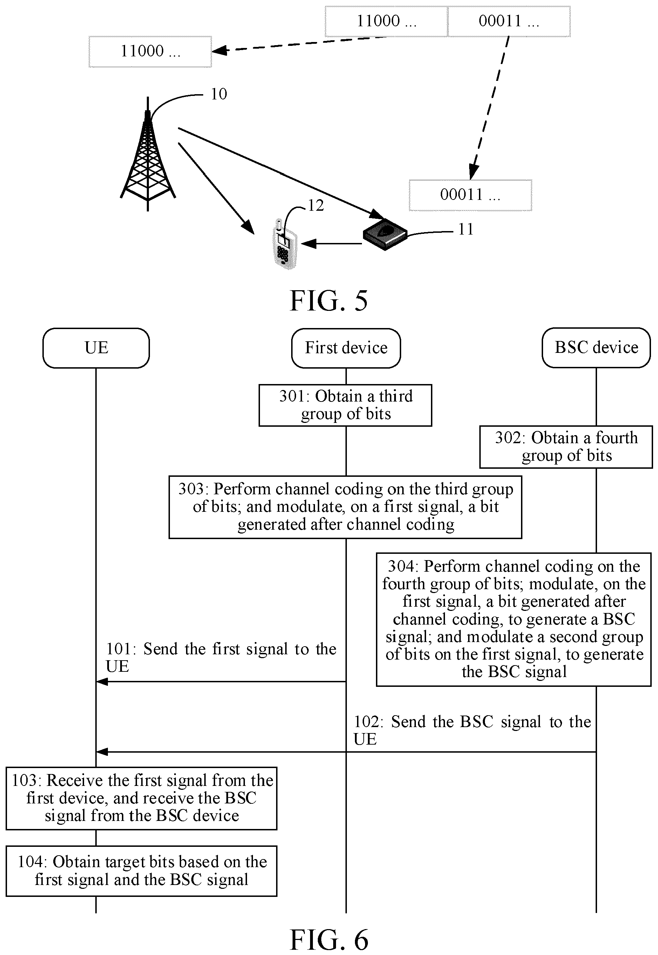

For example, an example in which the first device is the base station is used for description. As shown in FIG. 5, the another device may perform channel coding on the target bits with the code rate of 0.5, to obtain the first bit (for example, information "11000 ... 00011 ... "). Therefore, a base station 10 may obtain the first group of bits (that is, information "11000"), and a BSC device 11 may obtain the second group of bits (that is, information "00011"), so that the base station 10 can send the first signal to UE 12, and the BSC device 11 can send the BSC signal to the UE 12.

For another example, assuming that a plurality of RV redundant versions are generated after channel coding is performed on the target bits, the second device (such as the first device) may split the plurality of RV redundant versions into X RV redundant versions (that is, the first group of bits) and Y RV redundant versions (that is, the second group of bits), that is, the first group of bits and the second group of bits are different, so that the first device can obtain the X RV redundant versions, and the BSC device can obtain the Y RV redundant versions. Both X and Y are positive integers.

For another example, assuming that the target bits are 100-bit information, the second device (for example, the first device) may perform channel coding on the target bits with a code rate of 0.5, to obtain the first bit (that is, 200-bit information). Therefore, the first device may duplicate the 200-bit information, that is, one piece of the 200-bit information (that is, the first group of bits) and another piece of the 200-bit information (that is, the second group of bits), that is, the first group of bits and the second group of bits are the same, so that the first device can obtain the one piece of the 200-bit information, and the BSC device can obtain the another piece of the 200-bit information.

Step 203: The first device modulates the first group of bits on the first signal.

Step 204: The BSC device modulates the second group of bits on the first signal, to generate the BSC signal.

It can be learned that, the first device may obtain a part of the bit generated after channel coding is performed on the target bits, and modulate the part of bits on the first signal. The BSC device may obtain another part of the bit generated after channel coding is performed on the target bits, and modulates the another part of bits on the BSC signal, that is, the target bits are carried jointly on the first signal and the BSC signal, rather than all of the target bits are carried on the first signal. Therefore, time of transmitting the part of bits by the first signal may be reduced, to reduce time of transmitting the target bits.

### Example 2:

The first device may perform channel coding on a part (for example, a third group of bits in the following embodiments) of the target bits, and then modulate, on the first signal, a bit after channel coding. In addition, the BSC device may perform channel coding on another part (for example, a fourth group of bits in the following embodiments) of the target bits, and then modulate, on the first signal, a bit after channel coding, to generate the BSC signal.

Both the part of bits and the another part of bits are bits (information) that channel coding is not performed.

In this example, the first device may first obtain the part of bits, and then modulate the part of bits on the first signal. The BSC device may first obtain the another part of bits, and then modulate the another part of bits on the first signal, to generate the BSC signal.

Specifically, the target bits include a third group of bits and a fourth group of bits. With reference to FIG. 2, as shown in FIG. 6, before step 101, the communication method provided by this embodiment of this application may further include the following step 301 to step 304.

Step 301: The first device obtains the third group of bits.

In this embodiment of this application, the third group of bits is obtained after a second device splits the target bits. The second device includes any one of the following: the first device and another device.

It may be understood that, the another device may specifically include at least one of the following: the base station, the BSC device, and other UE.

Step 302: The BSC device obtains the fourth group of bits.

In this embodiment of this application, the fourth group of bits is obtained after the second device splits the target bits. The second device includes any one of the following: the first device and another device.

Further, optionally, in this embodiment of this application, the second device may directly split the target bits into the third group of bits and the fourth group of bits. Therefore, the first device may obtain the third group of bits, and the BSC device may obtain the fourth group of bits.

It may be understood that, the third group of bits and the fourth group of bits are obtained by splitting same source information.

In a case that the second device is the first device, the target bits may be information pre-stored in the first device (or information received from another device). Therefore, the first device may directly obtain the third group of bits, and send the fourth group of bits to the BSC device.

In a case that the second device is the another device, the target bits may be information pre-stored in the another device (or information received from the another communication device). Therefore, the another device may send the third group of bits to the first device, and send the fourth group of bits to the BSC device, so that the first device can obtain the third group of bits, and the BSC device can obtain the fourth group of bits.

Specifically, the third group of bits and the fourth group of bits may be the same or different.

Step 303: The first device performs channel coding on the third group of bits, and modulates, on the first signal, a bit generated after channel coding.

Step 304: The BSC device performs channel coding on the fourth group of bits, and modulates, on the first signal, a bit generated after channel coding, to generate the BSC signal.

It can be learned that, the first device may obtain a part of the target bits, and modulate, on the first signal, the bit generated after channel coding is performed on the part of bits. The BSC device may obtain another part of the target bits, and modulate, on the BSC signal, the bit generated after channel coding is performed on the another part of bits, that is, the target bits are carried jointly on the first signal and the BSC signal, rather than all of the target bits are carried on the first signal. Therefore, time of transmitting the part of bits by the first signal may be reduced, to reduce time of transmitting the target bits.

Step 103: The UE receives the first signal from the first device, and receives the BSC signal from the BSC device.

In this embodiment of this application, the BSC signal is obtained in a case that the BSC device modulates the first signal.

Step 104: The UE obtains the target bits based on the first signal and the BSC signal.

In this embodiment of this application, the target bits are respectively carried on the first signal and the BSC signal.

Optionally, in this embodiment of this application, the UE may demodulates the first signal and the BSC signal respectively, or the UE may perform demodulation and channel decoding on the first signal and the BSC signal respectively, to obtain all of the target bits, so that the UE can obtain the target bits.

Two different examples are used below to describe how the UE obtains the target bits.

### Example 3: The target bits include the first group of bits and the second group of bits.

Specifically, step 104 may be implemented through step 104a and step 104b below.

Step 104a: The UE modulates the first signal to obtain the first group of bits, and demodulates the BSC signal to obtain the second group of bits.

Step 104b: The UE performs joint channel decoding on the first group of bits and the second group of bits, to obtain the target bits.

In this embodiment of this application, after the second device splits the first bit, the first group of bits and the second group of bits are sent to the first device and the BSC device respectively. The second device includes any one of the following: the first device and the another device. The first bit is a bit generated after channel coding is performed on the target bits.

Further, optionally, in this embodiment of this application, the UE may combine the first group of bits and the second group of bits, and perform joint channel decoding (unified channel decoding) on the combined bits, to obtain the target bits.

### Example 4: The target bits include the third group of bits and the fourth group of bits.

Specifically, step 104 may be implemented through step 104c and step 104d below.

Step 104c: The UE performs demodulation and channel decoding on the first signal respectively, to obtain the third group of bits, and perform demodulation and channel decoding on the BSC signal respectively, to obtain the fourth group of bits.

In this embodiment of this application, after the second device splits the target bits, the third group of bits and the fourth group of bits are sent to the first device and the BSC device respectively. The second device includes any one of the following: the first device and another device.

Optionally, in this embodiment of this application, the third group of bits is data information, and the fourth group of bits is target control information.

Optionally, in this embodiment of this application, the third group of bits (that is, the data information) is associated with the target control information (that is, the fourth group of bits).

Further, optionally, in this embodiment of this application, the target control information includes at least one of the following:
acknowledge/negative acknowledge ACK/NACK information; and
downlink control information DCI corresponding to the data information.

For example, assuming that the target control information is the ACK/NACK information, if the first device or the another device successfully receives the data information sent by the UE, the target control information is the ACK information; if the first device or the another devices does not successfully receive the data information sent by the UE, the target control information is the NACK information.

Further, optionally, in this embodiment of this application, a first corresponding relationship exists between sending time corresponding to the first signal and sending time corresponding to the BSC signal. The first corresponding relationship is specified by a protocol, or is configured by the first device.

Specifically, the first corresponding relationship may specifically be a corresponding relationship between one moment and another moment, or a corresponding relationship between one time unit and another time unit. The time unit may be any one of the following: a slot, a subframe, a symbol, a micro-slot, a mini-slot, and the like.

For example, assuming that the sending time corresponding to the first signal is T1, that is, the first device sends the first signal at a T1 moment, and T1 corresponds to T2 based on the first corresponding relationship, the sending time corresponding to the BSC signal is T2. That is, the BSC device modulates the information on the first signal at a T2 moment, to generate the BSC signal (that is, the first device also sends the first signal at the T2 moment).

For another example, assuming that the sending time corresponding to the first signal is a subframe M, that is, the first device sends the first signal in the subframe M, and M corresponds to N based on the first corresponding relationship, the sending time corresponding to the BSC signal is a subframe N. That is, the BSC device modulates the information on the first signal sent in the subframe N, to generate the BSC signal (that is, the first device also sends the first signal in the subframe N).

Step 104d: The UE obtains the target bits based on the third group of bits and the fourth group of bits.

Further, optionally, in this embodiment of this application, the UE may combine the third group of bits and the fourth group of bits, to obtain the target bits.

In the communication method provided by this embodiment of this application, the UE may receive the first signal and the BSC signal (where the BSC signal is obtained in a case that the BSC device modulates the first signal) from the first device and the BSC device respectively. Therefore, the UE may obtain the target bits respectively carried on the first signal and the BSC signal based on the first signal and the BSC signal. When the information (that is, the target bits) is transmitted to the UE, the target bits are respectively carried on the first signal and the BSC signal that is obtained by modulating the first signal. That is, a part of the target bits is carried on the first signal, and not all of the target bits are carried on the first signal. Therefore, time of transmitting the part of bits by the first signal may be reduced, to reduce time of transmitting the target bits. In this way, information transmission efficiency can be improved.

Certainly, before receiving the first signal and the BSC signal, the UE may further receive transmission parameters of the first signal and the BSC signal. Two different examples are used below for description.

### Example 5: The UE receives the transmission parameters of the first signal and the BSC signal from the first device.

Specifically, before step 101, the communication method provided by this embodiment of this application may further include the following step 401 and step 402.

Step 401: The first device sends first control information to the UE.

In this embodiment of this application, the first control information indicates the transmission parameters of the first signal and the BSC signal.

Further, optionally, in this embodiment of this application, the first control information may specifically be first sub-control information and second sub-control information. The first sub-control information indicates the transmission parameter of the first signal, and the second sub-control information indicates the transmission parameter of the BSC signal.

Further, optionally, in this embodiment of this application, the transmission parameter includes at least one of the following: a time domain parameter, a frequency domain parameter, and the like.

Step 402: The UE receives the first control information from the first device.

It can be learned that, because the UE may receive the transmission parameters of the first signal and the BSC signal from the first device, the UE may accurately receive the first signal and the BSC signal.

### Example 6: The UE receives the transmission parameter of the first signal from the first device, and receives the transmission parameter of the BSC signal from the BSC device.

Specifically, before step 101, the communication method provided by this embodiment of this application may further include the following step 501 to step 503.

Step 501: The first device sends second control information to the UE.

In this embodiment of this application, the second control information indicates the transmission parameter of the first signal.

Step 502: The BSC device sends third control information to the UE.

In this embodiment of this application, the third control information indicates the transmission parameter of the BSC signal.

It should be noted that, an execution sequence of step 501 and step 502 is not limited in this embodiment of this application.

In a possible implementation, step 501 may be performed first, and then step 502 is performed. To be specific, the first device may first send the second control information to the UE, and then the BSC device sends the third control information to the UE.

In another a possible implementation, step 502 may be performed first, and then step 501 is performed. To be specific, the BSC device may first send the third control information to the UE, and then the first device sends the second control information to the UE.

In still another possible implementation, step 501 may be simultaneously performed when step 502 is performed. To be specific, the first device simultaneously sends the second control information to the UE when the BSC device sends the third control information to the UE.

Step 503: The UE receives the second control information from the first device, and receives third control information from the BSC device.

It can be learned that, because the UE may receive the transmission parameters of the first signal and the BSC signal from the first device and the BSC device respectively, the UE may accurately receive the first signal and the BSC signal.

Specific content included in the transmission parameter is described below by using an example. The transmission parameter may be the transmission parameter of the first signal, and/or the transmission parameter of the BSC signal.

Optionally, in this embodiment of this application, the transmission parameter includes at least one of the following:
a time domain resource;
a frequency domain resource;
a modulation manner;
a coding manner;
a target time interval;
an information precoding manner;
an information splitting manner of a target group of bits;
a subframe or a symbol occupied by the first signal and the BSC signal;
target time information;
at least one cycle length of the BSC signal;
a symbol length of the BSC signal;
transmission duration of the BSC signal;
a length of a delimiter of the BSC signal;
a time offset of the delimiter;
a length of a preamble of the BSC signal;
a time offset of the preamble;
information synchronously related to the BSC device;
information related to frequency shifting of the first signal by the BSC device;
target duration; and
target sequence information.

Further, optionally, in this embodiment of this application, the time domain resource includes any one of the following: a slot, a symbol, and the like.

Further, optionally, in this embodiment of this application, the frequency domain resource may include any one of the following: a bandwidth part (Bandwidth Part, BWP), a resource block (Resource Block, RB), and the like.

Further, optionally, in this embodiment of this application, the modulation manner may be a manner based on binary on-off keying (on-off keying, OOK) or binary phase shift keying (Binary Phase Shift Keying, BPSK).

Further, optionally, in this embodiment of this application, the coding manner may be miller coding, manchester coding, FMO coding, and the like. The coding manner determines minimum time granularity of a high and low level transition in one symbol

In this embodiment of this application, the target time interval indicates a time interval between sending time of the control information and corresponding sending time of the bit;

It should be noted that, the "corresponding bit" may be understood as a bit that is indicated by the control information and that is carried on the signal.

For example, assuming that the target time interval indicates a time interval between sending time of the second control information and the corresponding sending time of the bit, the corresponding bit may specifically be a bit carried on the first signal (that is, the first group of bits, or the third group of bits).

In this embodiment of this application, the target group of bits is the first group of bits and the second group of bits, or the third group of bits and the fourth group of bits.

Further, optionally, in this embodiment of this application, an information splitting manner of the target group of bits indicates that how the second device splits the target group of bits.

In this embodiment of this application, the target time information indicates time information of the BSC signal sent by the BSC device.

Further, optionally, in this embodiment of this application, the target time information specifically indicates possible duration of the BSC signal sent by the BSC device.

Specifically, the target time information includes any one of the following:
first time information; and
second time information.

In this embodiment of this application, the first time information includes at least one of aperiodic transmission mode information and aperiodic transmission time information. The second time information includes at least one of periodic transmission mode information, a transmission cycle, and periodic transmission time information.

For example, the time information of the aperiodic transmission mode time information may specifically be possible duration of aperiodic transmission. For example, from 4 to 5 o'clock in the morning during one day.

The transmission cycle may specifically be duration of the transmission cycle (for example, a transmission cycle of 10 milliseconds (ms)), signal transmission time (for example, 5 ms) including the BSC signal in a cycle, and time (for example, 5 ms) when no signal is transmitted. During time when the BSC device does not transmit the signal, the BSC device may perform energy collection.

The time information of the periodic transmission mode time information may specifically be possible duration of periodic transmission. For example, which bit (information) may be transmitted in the cycle.

Further, optionally, in this embodiment of this application, each cycle length of at least one cycle length of the BSC signal may be at least one of the following: a length of the subframe or the slot, a quantity of symbols included in the subframe or the slot, and the like.

Further, optionally, in this embodiment of this application, the symbol length of the BSC signal may be the length of time that the BSC device sends 0 or 1. For example, one subframe or the slot is occupied when 0 or 1 is sent.

Further, optionally, in this embodiment of this application, the transmission duration of the BSC signal may specifically be the cycle length of the BSC signal transmission. It may be understood that, the UE needs to buffer the transmission duration of the BSC signal after demodulating.

In this embodiment of this application, the delimiter indicates a starting moment of the BSC signal. The preamble is used by a receiving device (that is, the UE) of the BSC signal for synchronization or channel estimation.

Further, optionally, in this embodiment of this application, the information synchronously related to the BSC device includes at least one of the following:
the starting moment of a symbol or a slot of the BSC signal; and
deviation information between definite time and target definite time of the BSC device. The target definite time includes any one of the following: definite time of the first signal and definite time of the second communication apparatus.

Specifically, the starting moment of the symbol or the slot of the BSC signal may specifically be an absolute moment, or a relative moment.

For example, assuming that the starting moment is T1, and when the starting moment is the absolute moment, the starting moment of the symbol or the slot of the BSC signal is T1.

When the starting moment is the relative moment, the starting moment of the symbol or the slot of the BSC signal may be a moment before (or after) the target moment T1. The target moment may be a starting moment of a symbol or a slot of the first signal.

Further, optionally, in this embodiment of this application, the information related to frequency shifting of the first signal by the BSC device includes at least one of the following:
whether frequency shifting is supported;
a center frequency point after a frequency point is moved; and
a bandwidth after the frequency point is moved.

In this embodiment of this application, the target duration is minimum duration in which an amplitude and a phase of the BSC signal remain unchanged.

Further, optionally, in this embodiment of this application, the minimum duration in which the amplitude and the phase of the BSC signal remain unchanged may specifically be an absolute value, or a time unit length

For example, the minimum duration in which the amplitude and the phase of the BSC signal remain unchanged may be 1 ms, or at least two symbol lengths of the first signal, or at least two subframe lengths or slot lengths of the first signal.

In this embodiment of this application, the target sequence information is associated with an identifier of the BSC device, or is associated with a scrambling sequence of the BSC signal.

Further, optionally, in this embodiment of this application, the identifier of the BSC device may specifically be a device digital identifier (identity document, ID) of the BSC device.

In the communication method provided by this embodiment of this application, an execution entity may be the UE (or the first device, or the BSC device). In this embodiment of this application, that the UE (or the first device, or the BSC device) performs the communication method is used as an example to describe the communication method provided by this embodiment of this application.

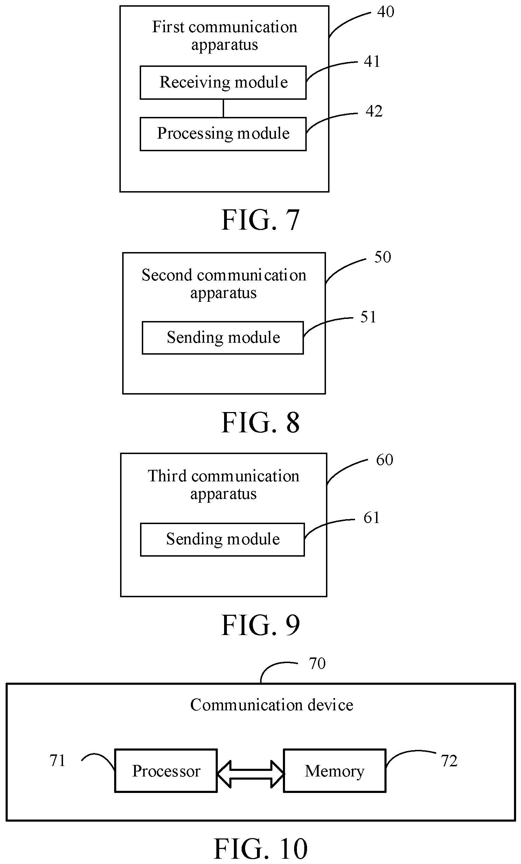

FIG. 7 is a possible schematic diagram of a structure of a communication apparatus according to an embodiment of this application. The communication apparatus is a first communication apparatus. As shown in FIG. 7, a first communication apparatus 40 may include a receiving module 41 and a processing module 42.

The receiving module 41 is configured to: receive a first signal from a second communication apparatus, and receive a BSC signal from a third communication apparatus. The BSC signal is obtained in a case that the third communication apparatus modulates the first signal. The processing module 42 is configured to obtain the target bits based on the first signal and the BSC signal received by the receiving module 41. The target bits are respectively carried on the first signal and the BSC signal.

In a possible implementation, the processing module 42 is specifically configured to perform joint channel decoding on a first group of bits and a second group of bits, to obtain the target bits. After a fourth communication apparatus splits a first bit, the first group of bits and the second group of bits are sent to the second communication apparatus and the third communication apparatus respectively. The fourth communication apparatus includes any one of the following: the second communication apparatus and another communication apparatus. The first bit is a bit generated after channel coding is performed on the target bits.

In a possible implementation, the processing module 42 is specifically configured to: perform demodulation and channel decoding on the first signal respectively, to obtain a third group of bits; perform demodulation and channel decoding on the BSC signal respectively, to obtain a fourth group of bits; and obtain the target bits based on the third group of bits and the fourth group of bits. After the fourth communication apparatus splits the target bits, the third group of bits and the fourth group of bits are sent to the second communication apparatus and the third communication apparatus respectively. The fourth communication apparatus includes any one of the following: the second communication apparatus and the another communication apparatus.

In a possible implementation, the third group of bits is data information. The fourth group of bits is target control information.

In a possible implementation, the target control information includes at least one of the following: ACK/NACK information and DCI corresponding to the data information.

In a possible implementation, a first corresponding relationship exists between sending time corresponding to the first signal and sending time corresponding to the BSC signal. The first corresponding relationship is specified by a protocol, or is configured by the second communication apparatus.

In a possible implementation, the receiving module 41 is further configured to: receive first control information from the second communication apparatus; or receive second control information from the second communication apparatus; and receive third control information from the third communication apparatus. The first control information indicates transmission parameters of the first signal and the BSC signal. The second control information indicates a transmission parameter of the first signal. The third control information indicates a transmission parameter of the BSC signal.

In a possible implementation, the transmission parameter includes at least one of the following: a time domain resource, a frequency domain resource, a modulation manner; a coding manner; a target time interval; an information precoding manner; an information splitting manner of a target group of bits; a subframe or a symbol occupied by the first signal and the BSC signal; target time information; at least one cycle length of the BSC signal; a symbol length of the BSC signal; transmission duration of the BSC signal; a length of a delimiter of the BSC signal; a time offset of the delimiter; a length of a preamble of the BSC signal; a time offset of the preamble; information synchronously related to the third communication apparatus; information related to frequency shifting of the first signal by the third communication apparatus; target duration; and target sequence information. The target time interval indicates a time interval between sending time of the control information and corresponding sending time of the bit. The target group of bits is the first group of bits and the second group of bits, or the third group of bits and the fourth group of bits. The target time information indicates time information of the BSC signal sent by the third communication apparatus. The delimiter indicates a starting moment of the BSC signal. The target duration is minimum duration in which an amplitude and a phase of the BSC signal remain unchanged. The target sequence information is associated with an identifier of the third communication apparatus, or is associated with a scrambling sequence of the BSC signal.

In a possible implementation, the target time information includes any one of the following: first time information; and second time information. The first time information includes at least one of aperiodic transmission mode information and aperiodic transmission time information. The second time information includes at least one of periodic transmission mode information, a transmission cycle, and periodic transmission time information.

In a possible implementation, the information synchronously related to the third communication apparatus includes at least one of the following: a starting moment of a symbol or a slot of the BSC signal and deviation information between definite time and target definite time of the third communication apparatus. The target definite time includes any one of the following: definite time of the first signal and definite time of the second communication apparatus.

In a possible implementation, the information related to frequency shifting of the first signal by the third communication apparatus includes at least one of the following: whether frequency shifting is supported; a center frequency point after a frequency point is moved; and a bandwidth after the frequency point is moved.

The communication apparatus provided by this embodiment of this application, when the information (that is, the target bits) is transmitted to the first communication apparatus, the target bits are respectively carried on the first signal and the BSC signal that is obtained by modulating the first signal. That is, a part of the target bits is carried on the first signal, and not all of the target bits are carried on the first signal. Therefore, time of transmitting the part of bits by the first signal may be reduced, to reduce time of transmitting the target bits. In this way, information transmission efficiency can be improved.

The first communication apparatus in this embodiment of this application may be an electronic device, such as an electronic device having an operating system, or a component in the electronic device, such as an integrated circuit or a chip. The electronic device may be the terminal, or may be a device other than the terminal. For example, the terminal may include but not limited to a type of the terminal 11 listed above. Other devices may be a server, a network attached storage (Network Attached Storage, NAS). This is not specifically limited in this embodiment of this application.

The first communication apparatus provided by this embodiment of this application can realize each process realized by the method embodiments of FIG. 2 to FIG. 6 and achieve the same technical effect. To avoid repetition, this is not described herein again.

FIG. 8 is a possible schematic diagram of a structure of a communication apparatus according to an embodiment of this application. The communication apparatus is a second communication apparatus. As shown in FIG. 8, the second communication apparatus 50 may include a sending module 51.

The sending module 51 is configured to send a first signal to a first communication apparatus. The first signal is used by the first communication apparatus to obtain target bits. The target bits are respectively carried on the first signal and a BSC signal. The BSC signal is obtained in a case that the second communication apparatus 50 modulates the first signal.

In a possible implementation, the target bits include a first group of bits. The second communication apparatus 50 provided in this embodiment of this application may further include an obtaining module. The obtaining module is configured to obtain the first group of bits. A processing module is further configured to modulate, on the first signal, the first group of bits obtained by the obtaining module. The first group of bits is obtained after a fourth communication apparatus splits a first bit. The fourth communication apparatus includes any one of the following: the second communication apparatus 50 and another communication apparatus. The first bit is a bit generated after channel coding is performed on the target bits.

In a possible implementation, the target bits include a third group of bits. The second communication apparatus 50 provided in this embodiment of this application may further include the obtaining module and the processing module. The obtaining module is configured to obtain the third group of bits. The processing module is configured to: perform channel coding on the third group of bits obtained by the obtaining module; and modulate, on the first signal, a bit generated after channel coding. The third group of bits is obtained after the fourth communication apparatus splits the target bits. The fourth communication apparatus includes any one of the following: the second communication apparatus 50 and the another communication apparatus.

In a possible implementation, the sending module 51 is further configured to: send first control information to the first communication apparatus, or send second control information to the first communication apparatus. The first control information indicates transmission parameters of the first signal and the BSC signal. The second control information indicates a transmission parameter of the first signal.

The communication apparatus provided by this embodiment of this application, when the information (that is, the target bits) is transmitted to the first communication apparatus, the target bits are respectively carried on the first signal and the BSC signal that is obtained by modulating the first signal. That is, a part of the target bits is carried on the first signal, and not all of the target bits are carried on the first signal. Therefore, time of transmitting the part of bits by the first signal may be reduced, to reduce time of transmitting the target bits. In this way, information transmission efficiency can be improved.

The second communication apparatus in this embodiment of this application may be an electronic device, such as an electronic device having an operating system, or a component in the electronic device, such as an integrated circuit or a chip. The electronic device may be the terminal, or may be a device other than the terminal. For example, the terminal may include but not limited to a type of the terminal 11 listed above. Other devices may be a server, a network attached storage (Network Attached Storage, NAS). This is not specifically limited in this embodiment of this application.

The second communication apparatus provided by this embodiment of this application can realize each process realized by the method embodiments of FIG. 2 to FIG. 6 and achieve the same technical effect. To avoid repetition, this is not described herein again.

FIG. 9 is a possible schematic diagram of a structure of a communication apparatus according to an embodiment of this application. The communication apparatus is a third communication apparatus. As shown in FIG. 9, the third communication apparatus 60 may include a sending module 61.

The sending module 61 is configured to send a BSC signal to a first communication apparatus. The BSC signal is used by the first communication apparatus to obtain target bits. The target bits are carried on a first signal and the BSC signal respectively. The first signal is a signal sent by the first communication apparatus to a second communication apparatus. The BSC signal is obtained in a case that the third communication apparatus 60 modulates the first signal.

In a possible implementation, the target bits include a second group of bits. The third communication apparatus 60 provided in this embodiment of this application may further include an obtaining module and a processing module. The obtaining module is configured to obtain the second group of bits. The processing module is configured to modulate, on the first signal, the second group of bits obtained by the obtaining module, to generate the BSC signal. The second group of bits is obtained after a fourth communication apparatus splits a first bit. The fourth communication apparatus includes any one of the following: the second communication apparatus and another communication apparatus. The first bit is a bit generated after channel coding is performed on the target bits.

In a possible implementation, the target bits include a fourth group of bits. The third communication apparatus 60 provided in this embodiment of this application may further include an obtaining module and a processing module. The obtaining module is configured to obtain the fourth group of bits. The processing module is configured to: perform channel coding on the fourth group of bits obtained by the obtaining module; and modulate, on the first signal, a bit generated after channel coding, to generate the BSC signal. The fourth group of bits is obtained after the fourth communication apparatus splits the target bits. The fourth communication apparatus includes any one of the following: the second communication apparatus and the another communication apparatus.

In a possible implementation, the sending module 61 is further configured to send third control information to the first communication apparatus. The third control information indicates a transmission parameter of the BSC signal.

The communication apparatus provided by this embodiment of this application, when the information (that is, the target bits) is transmitted to the first communication apparatus, the target bits are respectively carried on the first signal and the BSC signal that is obtained by modulating the first signal. That is, a part of the target bits is carried on the first signal, and not all of the target bits are carried on the first signal. Therefore, time of transmitting the part of bits by the first signal may be reduced, to reduce time of transmitting the target bits. In this way, information transmission efficiency can be improved.

The third communication apparatus in this embodiment of this application may be an electronic device, such as an electronic device having an operating system, or a component in the electronic device, such as an integrated circuit or a chip. The electronic device may be the terminal, or may be a device other than the terminal. For example, the terminal may include but not limited to a type of the terminal 11 listed above. Other devices may be a server, a network attached storage (Network Attached Storage, NAS). This is not specifically limited in this embodiment of this application.

The third communication apparatus provided by this embodiment of this application can realize each process realized by the method embodiments of FIG. 2 to FIG. 6 and achieve the same technical effect. To avoid repetition, this is not described herein again.

Optionally, in this embodiment of this application, as shown in FIG. 10, an embodiment of this application further provides a communication device 70, including a processor 71 and a memory 72. The memory 72 stores a program or instructions run on the processor 71. For example, when the communication 70 is a terminal, each step of the communication device when the program or the instructions is/are executed by the processor 71, and a same technical effect can be achieved. When the communication device 70 is a network side device, each step of the communication device is implemented when the program or the instructions is/are executed by the processor 71, and the same technical effect can be achieved. To avoid repetition, this is not described herein again.

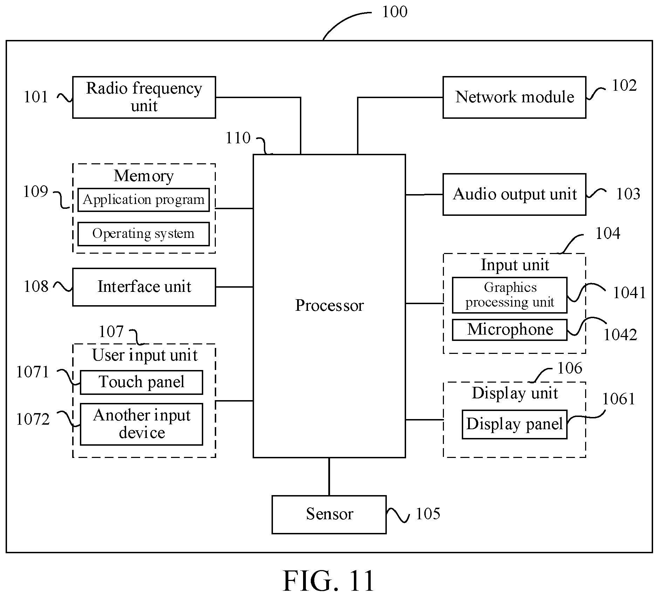

An embodiment of this application further provides a terminal, including a processor and a communication interface. The communication interface is configured to: receive a first signal from a first device, and receive a BSC signal from a BSC device. The BSC signal is obtained in a case that the BSC device modulates the first signal. The processor is configured to obtain target bits based on the first signal and the BSC signal. The target bits are respectively carried on the first signal and the BSC signal. This terminal embodiment corresponds to the foregoing terminal side method embodiments. Each implementation process and implementation in the foregoing method embodiments are applied to this terminal embodiment, and a same technical effect can be achieved. Specifically, FIG. 11 is a schematic hardware diagram a structure of a terminal for implementing an embodiment of this application.

A terminal 100 includes, but is not limited to, at least some parts of components such as a radio frequency unit 101, a network module 102, an audio output unit 103, an input unit 104, a sensor 105, a display unit 106, a user input unit 107, an interface unit 108, a memory 109, a processor 110.

A person skilled in the art may understand that the terminal 100 may further include the power supply (such as a battery) for supplying power to components. The power supply may be logically connected to the processor 110 by a power management system, to implement functions such as charging, discharging, and power consumption management by using the power management system. The terminal structure shown in FIG. 11 does not constitute a limitation on the terminal, and the terminal may include more or fewer components than shown, or combine some components, or have different component arrangements. This is not described herein again.

It should be understood that, the input unit 104 may include a graphics processing unit (Graphics Processing Unit, GPU) 1041 and a microphone 1042. The graphics processing unit 1041 performs processing on image data of a static picture or a video that is obtained by an image acquisition device (for example, a camera) in a video acquisition mode or an image acquisition mode. The display unit 106 may include a display panel 1061, and the display panel 1061 may be configured by using a liquid crystal display, an organic light-emitting diode, or the like. The user input unit 107 includes at least one of a touch panel 1071 and another input device 1072. The touch panel 1071 may also be referred to as a touchscreen. The touch panel 1071 may include two parts: a touch detection apparatus and a touch controller. The another input device 1072 may include, but is not limited to, a physical keyboard, a functional key (such as a volume control key or a switch key), a track ball, a mouse, and a joystick. This is not repeated herein again.

In this embodiment of this application, after receiving downlink data from a network side device, a radio frequency unit 101 may transmit the downlink data to the processor 110 for processing. In addition, the radio frequency unit 101 may send uplink data to the network side device. Generally, the radio frequency unit 101 includes, but is not limited to, an antenna, an amplifier, a transceiver, a coupler, a low noise amplifier, a duplexer, and the like.

The memory 109 may be configured to store a software program or instructions and various data. The memory 109 may mainly include a first storage area that stores a program or instructions and a second storage area that stores data. The first storage area may store an operating system, an application program or the instructions required by at least one function (for example, a sound playback function and an image display function), and the like. In addition, the memory 109 may include a volatile memory or a non-volatile memory, or the memory 109 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR_SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DRRAM). The memory 109 in this embodiment of this application includes, but is not limited to, the memories and any other memory of a suitable type.

The processor 110 may include one or more processing units. Optionally, the processor 110 may integrate an application processor and a modem processor. The application processor mainly processes an operation involving technologies operating system, a user interface, an application program, and the like. The modem processor mainly processes a wireless communication signal, such as a baseband processor. It may be understood that the foregoing modem may either not be integrated into the processor 110.

The radio frequency unit 101 is configured to: receive a first signal from a first device, and receive a BSC signal from a BSC device. The BSC signal is obtained in a case that the BSC device modulates the first signal.

The processor 110 is configured to obtain target bits based on the first signal and the BSC signal. The target bits are respectively carried on the first signal and the BSC signal.

The terminal provided by this embodiment of this application, when the information (that is, the target bits) is transmitted to the terminal, the target bits are respectively carried on the first signal and the BSC signal that is obtained by modulating the first signal. That is, a part of the target bits is carried on the first signal, and not all of the target bits are carried on the first signal. Therefore, time of transmitting the part of bits by the first signal may be reduced, to reduce time of transmitting the target bits. In this way, information transmission efficiency can be improved.

Optionally, in this embodiment of this application, the processor 110 is specifically configured to: demodulate the first signal, to obtain a first group of bits; demodulate the BSC signal, to obtain a second group of bits; and perform joint channel decoding on the first group of bits and the second group of bits, to obtain the target bits.

After the second device splits the first bit, the first group of bits and the second group of bits are sent to the first device and the BSC device respectively. The second device includes any one of the following: the first device and another device. The first bit is a bit generated after channel coding is performed on the target bits.

It can be learned that, the first device may obtain a part of the bit generated after channel coding is performed on the target bits, and modulate the part of bits on the first signal. The BSC device may obtain another part of the bit generated after channel coding is performed on the target bits, and modulates the another part of bits on the BSC signal, that is, the target bits are carried jointly on the first signal and the BSC signal, rather than all of the target bits are carried on the first signal. Therefore, time of transmitting the part of bits by the first signal may be reduced, to reduce time of transmitting the target bits.

Optionally, in this embodiment of this application, the processor 110 is specifically configured to: perform demodulation and channel decoding on the first signal respectively, to obtain the third group of bits; perform demodulation and channel decoding on the BSC signal respectively, to obtain the fourth group of bits; and obtain the target bits based on the third group of bits and the fourth group of bits.

After the second device splits the target bits, the third group of bits and the fourth group of bits are sent to the first device and the BSC device respectively. The second device includes any one of the following: the first device and another device.

It can be learned that, the first device may obtain a part of the target bits, and modulate the bit generated after channel coding is performed on the part of bits on the first signal. The BSC device may obtain another part of the target bits, and modulate the bit generated after channel coding is performed on the another part of bits on the BSC signal, that is, the target bits are carried jointly on the first signal and the BSC signal, rather than all of the target bits are carried on the first signal. Therefore, time of transmitting the part of bits by the first signal may be reduced, to reduce time of transmitting the target bits.

Optionally, in this embodiment of this application, the frequency unit 101 is further configured to: receive first control information from the first device; or receive second control information from the first device; and receive third control information from the BSC device.

The first control information indicates transmission parameters of the first signal and the BSC signal, the second control information indicates a transmission parameter of the first signal, and the third control information indicates a transmission parameter of the BSC signal.

An embodiment of this application further provides a terminal, including a processor and a communication interface. The communication interface is configured to send the BSC signal to the UE. The BSC signal is used by the UE to obtain the target bits. The target bits are respectively carried on the first signal and the BSC signal. The first signal is a signal sent by the first device to the UE. The BSC signal is obtained in a case that the terminal modulates the first signal. This terminal embodiment corresponds to the foregoing terminal side method embodiments. Each implementation process and implementation in the foregoing method embodiments are applied to this terminal embodiment, and a same technical effect can be achieved. Specifically, FIG. 11 is a schematic hardware diagram a structure of a terminal for implementing an embodiment of this application.

A terminal 100 includes, but is not limited to, at least some parts of components such as a radio frequency unit 101, a network module 102, an audio output unit 103, an input unit 104, a sensor 105, a display unit 106, a user input unit 107, an interface unit 108, a memory 109, a processor 110.

A person skilled in the art may understand that the terminal 100 may further include the power supply (such as a battery) for supplying power to components. The power supply may be logically connected to the processor 110 by a power management system, to implement functions such as charging, discharging, and power consumption management by using the power management system. The terminal structure shown in FIG. 11 does not constitute a limitation on the terminal, and the terminal may include more or fewer components than shown, or combine some components, or have different component arrangements. This is not described herein again.

It should be understood that, the input unit 104 may include a graphics processing unit (Graphics Processing Unit, GPU) 1041 and a microphone 1042. The graphics processing unit 1041 performs processing on image data of a static picture or a video that is obtained by an image acquisition device (for example, a camera) in a video acquisition mode or an image acquisition mode. The display unit 106 may include a display panel 1061, and the display panel 1061 may be configured by using a liquid crystal display, an organic light-emitting diode, or the like. The user input unit 107 includes at least one of a touch panel 1071 and another input device 1072. The touch panel 1071 may also be referred to as a touchscreen. The touch panel 1071 may include two parts: a touch detection apparatus and a touch controller. The another input device 1072 may include, but is not limited to, a physical keyboard, a functional key (such as a volume control key or a switch key), a track ball, a mouse, and a joystick. This is not repeated herein again.

In this embodiment of this application, after receiving downlink data from a network side device, a radio frequency unit 101 may transmit the downlink data to the processor 110 for processing. In addition, the radio frequency unit 101 may send uplink data to the network side device. Generally, the radio frequency unit 101 includes, but is not limited to, an antenna, an amplifier, a transceiver, a coupler, a low noise amplifier, a duplexer, and the like.

The memory 109 may be configured to store a software program or instructions and various data. The memory 109 may mainly include a first storage area that stores a program or instructions and a second storage area that stores data. The first storage area may store an operating system, an application program or the instructions required by at least one function (for example, a sound playback function and an image display function), and the like. In addition, the memory 109 may include a volatile memory or a non-volatile memory, or the memory 109 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR_SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DRRAM). The memory 109 in this embodiment of this application includes, but is not limited to, the memories and any other memory of a suitable type.

The processor 110 may include one or more processing units. Optionally, the processor 110 may integrate an application processor and a modem processor. The application processor mainly processes an operation involving technologies operating system, a user interface, an application program, and the like. The modem processor mainly processes a wireless communication signal, such as a baseband processor. It may be understood that the foregoing modem may either not be integrated into the processor 110.

The radio frequency unit 101 is configured to send a BSC signal to UE.

The BSC signal is used by the UE to obtain target bits. The target bits are carried on a first signal and the BSC signal respectively. The first signal is a signal sent by a first device to the UE. The BSC signal is obtained in a case that a BSC device modulates the first signal.

The terminal provided by this embodiment of this application, when the information (that is, the target bits) is transmitted to the terminal, the target bits are respectively carried on the first signal and the BSC signal that is obtained by modulating the first signal. That is, a part of the target bits is carried on the first signal, and not all of the target bits are carried on the first signal. Therefore, time of transmitting the part of bits by the first signal may be reduced, to reduce time of transmitting the target bits. In this way, information transmission efficiency can be improved.

Optionally, in this embodiment of this application, the target bits include the second group of bits.

The radio frequency unit 101 is further configured to obtain the second group of bits.

The processor 110 is further configured to modulate the second group of bits on the first signal, to generate the BSC signal.

The second group of bits is obtained after the second device splits the first bit. The second device includes any one of the following: the first device and the another device. The first bit is a bit generated after channel coding is performed on the target bits.

It can be learned that, the first device may obtain a part of the bit generated after channel coding is performed on the target bits, and modulate the part of bits on the first signal. The BSC device may obtain another part of the bit generated after channel coding is performed on the target bits, and modulates the another part of bits on the BSC signal, that is, the target bits are carried jointly on the first signal and the BSC signal, rather than all of the target bits are carried on the first signal. Therefore, time of transmitting the part of bits by the first signal may be reduced, to reduce time of transmitting the target bits.

Optionally, in this embodiment of this application, the target bits include a fourth group of bits.

The radio frequency unit 101 is further configured to obtain the fourth group of bits.

The processor 110 is further configured to: perform channel coding on the fourth group of bits; and modulate, on the first signal, a bit generated after channel coding, to generate the BSC signal.

The fourth group of bits is obtained after the second device splits the target bits. The second device includes any one of the following: the first device, and the another device.

It can be learned that, the first device may obtain a part of the target bits, and modulate the bit generated after channel coding is performed on the part of bits on the first signal. The BSC device may obtain another part of the target bits, and modulate the bit generated after channel coding is performed on the another part of bits on the BSC signal, that is, the target bits are carried jointly on the first signal and the BSC signal, rather than all of the target bits are carried on the first signal. Therefore, time of transmitting the part of bits by the first signal may be reduced, to reduce time of transmitting the target bits.

Optionally, in this embodiment of this application, the radio frequency unit 101 is further configured to send the third control information to the UE.

The third control information indicates the transmission parameter of the BSC signal.

An embodiment of this application further provides a network side device, including a processor and a communication interface. The communication interface is configured to send a first signal to UE. The first signal is used by the UE to obtain the target bits. The target bits are respectively carried on the first signal and the BSC signal. The BSC signal is obtained in a case that the BSC device modulates the first signal. This network side device embodiment corresponds to the foregoing network side device method embodiments. Each implementation process and implementation in the foregoing method embodiments are applied to this network side device embodiment, and a same technical effect can be achieved.

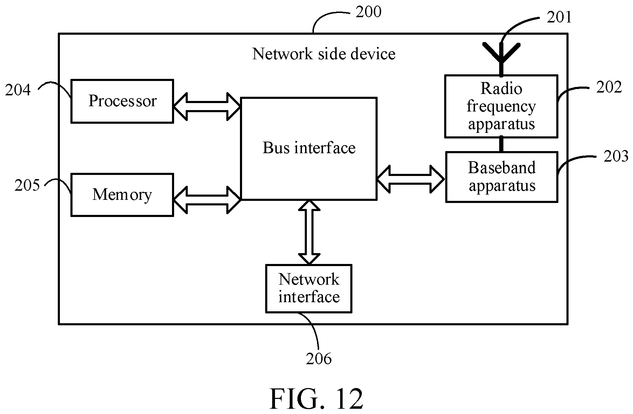

Specifically, an embodiment of this application further provides a network side device. As shown in FIG. 12, a network side device 200 includes an antenna 201, a radio frequency apparatus 202, a baseband apparatus 203, a processor 204 and a memory 205. The antenna 201 is connected with the radio frequency apparatus 202. In an uplink direction, the radio frequency apparatus 202 receives information by using the antenna 201 and sends the received information to the baseband apparatus 203 for processing. In a downlink direction, the baseband apparatus 203 processes information to be sent and sends the information to the radio frequency apparatus 202. The radio frequency apparatus 202 processes the received information and then sends the information by using the antenna 201.

The method performed by the network side device in foregoing embodiments may be implemented in the baseband apparatus 203. The baseband apparatus 203 includes a baseband processor.

The baseband apparatus 203, for example, may include at least one baseband board. The baseband board disposes a plurality of chips. As shown in FIG. 12, one chip is the baseband processor, and is connected with the memory 205 through a bus interface, to use a program of the memory 205, and perform network side device operations shown in foregoing method embodiments.

The network side device may further include a network interface 206. The interface is, for example, a common public radio interface (common public radio interface, CPRI).

Specifically, the network side device 200 in this embodiment of this application further includes instructions or a program stored in the memory 205 and run on the processor 204. The processor 204 use the instructions or the program stored in the memory 205 to perform the method performed by each module shown in FIG. 12, and a same technical effect is achieved. To avoid repetition, this is not described herein again.

An embodiment of this application further provides a readable storage medium, where the readable storage medium stores a program or instructions. Each process of the communication method is implemented when the program or the instructions is/are executed by a processor, and a same technical effect can be achieved. To avoid repetition, this is not described herein again.

The processor may be a processor of the terminal in foregoing embodiments. The readable storage medium includes a computer-readable storage medium, for example, a computer read-only memory ROM, a random access memory RAM, magnetic disk, or optical disk

An embodiment of this application further provides a chip. The chip includes a processor and a communication interface. The communication interface is coupled to the processor. The processor is used to run a program or instructions, to implement the communication method, and a same technical effect can be achieved. To avoid repetition, this is not described herein again.

It should be understood that, the chip mentioned in this embodiment of this application further may be referred to as a system chip, a chip system, a system on chip, or the like.

An embodiment of this application provides a computer program/program product, where the computer program/program product is stored in a storage medium. The computer program/program product is executed by at least one processor to implement each process of the communication method, and a same technical effect can be achieved. To avoid repetition, this is not described herein again.

An embodiment of this application further provides a communication system, including a terminal and a network side device. The terminal is used to perform steps of the communication method. The network side device is used to perform steps of the communication method.

It should be noted that the term " include", "comprise" or any other variation thereof in this specification is intended to cover a non-exclusive inclusion, which specifies the presence of stated processes, methods, objects, or apparatuses, but does not preclude the presence or addition of one or more other processes, methods, objects, or apparatuses. Without more limitations, elements defined by the sentence "including one ...... " does not exclude that there are still other same elements in the processes, methods, objects, or apparatuses. In addition, it should be noted that, a range of the method and the apparatus in embodiments of this application is not limited to perform a function in a sequence shown or discussed, and may further include performing the function based on a related function in a substantially same manner or in a reverse sequence. For example, the function may be performed in the sequence shown or discussed. The described method may be performed in a sequence different from the described method, and various steps may alternatively be added, omitted, or combined. In addition, features described with reference to examples may be combined in other examples.

Through the descriptions of the foregoing implementations, a person skilled in the art may clearly understand that the methods in the foregoing embodiments may be implemented by using software and a necessary general hardware platform, and certainly, may alternatively be implemented by hardware, but in many cases, the former manner is a better implementation. Based on such an understanding, the technical solutions of this application essentially or the part contributing to the current art may be implemented in a form of a computer software product. The computer software product is stored in a storage medium (such as a ROM/RAM, a magnetic disk, or an optical disc) and includes several instructions for instructing a terminal (which may be a mobile phone, a computer, a server, an air conditioner, a network device, or the like) to perform the methods described in embodiments of this application.

Embodiments of this application are described above with reference to the accompanying drawings. However, this application is not limited to the foregoing specific implementations. The foregoing specific implementations are illustrative instead of imitative. Enlightened by this application, a person of ordinary skill in the art can make many forms without departing from the idea of this application and the scope of protection of the claims. All of the forms fall within the protection of this application.

## Claims

1. A communication method, the method comprising:
receiving, by user equipment UE, a first signal from a first device, and receiving a BSC signal from a backscatter communication BSC device, wherein the BSC signal is obtained in a case that the BSC device modulates the first signal; and
obtaining, by the UE, target bits based on the first signal and the BSC signal, wherein the target bits are respectively carried on the first signal and the BSC signal.

2. The method according to claim 1, wherein the obtaining, by the UE, target bits based on the first signal and the BSC signal comprises:
demodulating, by the UE, the first signal, to obtain a first group of bits, and demodulating the BSC signal, to obtain a second group of bits; and
performing, by the UE, joint channel decoding on the first group of bits and the second group of bits, to obtain the target bits, wherein
after a second device splits a first bit, the first group of bits and the second group of bits are sent to the first device and the BSC device respectively; and
the second device comprises any one of the following: the first device and another device, and the first bit is a bit generated after channel coding is performed on the target bits.

3. The method according to claim 1, wherein the obtaining, by the UE, target bits based on the first signal and the BSC signal comprises:
performing, by the UE, demodulation and channel decoding on the first signal respectively, to obtain a third group of bits, and performing demodulation and channel decoding on the BSC signal respectively, to obtain a fourth group of bits; and
obtaining, by the UE, the target bits based on the third group of bits and the fourth group of bits, wherein
after a second device splits the target bits, the third group of bits and the fourth group of bits are sent to the first device and the BSC device respectively; and
the second device comprises any one of the following: the first device and another device.

4. The method according to claim 3, wherein the third group of bits is data information, and the fourth group of bits is target control information.

5. The method according to claim 4, wherein the target control information comprises at least one of the following:
acknowledge/negative acknowledge ACK/NACK information; and
downlink control information DCI corresponding to the data information.

6. The method according to any one of claims 1 to 5, wherein a first corresponding relationship exists between sending time corresponding to the first signal and sending time corresponding to the BSC signal, and
the first corresponding relationship is specified by a protocol, or is configured by the first device.

7. The method according to claim 1, wherein before the receiving, by user equipment UE, a first signal from a first device, and receiving a BSC signal from a BSC device, the method further comprises:
receiving, by the UE, first control information from the first device; or
receiving, by the UE, second control information from the first device, and receiving third control information from the BSC device, wherein
the first control information indicates transmission parameters of the first signal and the BSC signal, the second control information indicates a transmission parameter of the first signal, and the third control information indicates a transmission parameter of the BSC signal.

8. The method according to claim 7, wherein the transmission parameter comprises at least one of the following:
a time domain resource;
a frequency domain resource;
a modulation manner;
a coding manner;
a target time interval;
an information precoding manner;
an information splitting manner of a target group of bits;
a subframe or a symbol occupied by the first signal and the BSC signal;
target time information;
at least one cycle length of the BSC signal;
a symbol length of the BSC signal;
transmission duration of the BSC signal;
a length of a delimiter of the BSC signal;
a time offset of the delimiter;
a length of a preamble of the BSC signal;
a time offset of the preamble;
information synchronously related to the BSC device;
information related to frequency shifting of the first signal by the BSC device;
target duration; and
target sequence information, wherein
the target time interval indicates a time interval between sending time of the control information and corresponding sending time of the bit;
the target group of bits is a first group of bits and a second group of bits, or a third group of bits and a fourth group of bits;
the target time information indicates time information of the BSC signal sent by the BSC device;
the delimiter indicates a starting moment of the BSC signal;
the target duration is minimum duration in which an amplitude and a phase of the BSC signal remain unchanged; and
the target sequence information is associated with an identifier of the BSC device, or is associated with a scrambling sequence of the BSC signal.

9. The method according to claim 8, wherein the target time information comprises any one of the following:
first time information; and
second time information, wherein
the first time information comprises at least one of aperiodic transmission mode information and aperiodic transmission time information; and
the second time information comprises at least one of periodic transmission mode information, a transmission cycle, and periodic transmission time information.

10. The method according to claim 8, wherein the information synchronously related to the BSC device comprises at least one of the following:
a starting moment of a symbol or a slot of the BSC signal; and
deviation information between definite time and target definite time of the BSC device, wherein
the target definite time comprises any one of the following: definite time of the first signal and definite time of the first device.

11. The method according to claim 8, wherein the information related to frequency shifting of the first signal by the BSC device comprises at least one of the following:
whether frequency shifting is supported;
a center frequency point after a frequency point is moved; and
a bandwidth after the frequency point is moved.

12. A communication method, the method comprising:
sending, by a first device, a first signal to UE, wherein
the first signal is used by the UE to obtain target bits; and
the target bits are carried on the first signal and a BSC signal respectively, and the BSC signal is obtained in a case that a BSC device modulates the first signal.

13. The method according to claim 12, wherein the target bits comprise a first group of bits, and
before the sending, by a first device, a first signal to UE, the method further comprises:
obtaining, by the first device, the first group of bits; and
modulating, by the first device, the first group of bits on the first signal, wherein
the first group of bits is obtained after a second device splits a first bit; and
the second device comprises any one of the following: the first device and another device, and the first bit is a bit generated after channel coding is performed on the target bits.

14. The method according to claim 12, wherein the target bits comprise a third group of bits, and
before the sending, by a first device, a first signal to UE, the method further comprises:
obtaining, by the first device, the third group of bits; and
performing, by the first device, channel coding on the third group of bits, and modulating, on the first signal, a bit generated after channel coding, wherein
the third group of bits is obtained after a second device splits the target bits; and
the second device comprises any one of the following: the first device and another device.

15. The method according to claim 12, wherein before the sending, by a first device, a first signal to UE, the method further comprises:
sending, by the first device, first control information to the UE; or
sending, by the first device, second control information to the UE, wherein
the first control information indicates transmission parameters of the first signal and the BSC signal, and the second control information indicates a transmission parameter of the first signal.

16. A communication method, the method comprising:
sending, by a BSC device, a BSC signal to UE, wherein
the BSC signal is used by the UE to obtain target bits; and
the target bits are carried on a first signal and the BSC signal respectively, the first signal is a signal sent by a first device to the UE, and the BSC signal is obtained in a case that the BSC device modulates the first signal.

17. The method according to claim 16, wherein the target bits comprise a second group of bits, and
before the sending, by a BSC device, a BSC signal to UE, the method further comprises:
obtaining, by the BSC device, the second group of bits; and
modulating, by the BSC device, the second group of bits on the first signal, to generate the BSC signal, wherein
the second group of bits is obtained after a second device splits a first bit; and
the second device comprises any one of the following: the first device and another device, and the first bit is a bit generated after channel coding is performed on the target bits.

18. The method according to claim 16, wherein the target bits comprise a fourth group of bits, and
before the sending, by a BSC device, a BSC signal to UE, the method further comprises:
obtaining, by the BSC device, the fourth group of bits; and
performing, by the BSC device, channel coding on the fourth group of bits, and modulating, on the first signal, a bit generated after channel coding, to generate the BSC signal, wherein
the fourth group of bits is obtained after a second device splits the target bits; and
the second device comprises any one of the following: the first device and another device.

19. The method according to claim 16, wherein before the sending, by a BSC device, a BSC signal to UE, the method further comprises:
sending, by the BSC device, third control information to the UE, wherein
the third control information indicates a transmission parameter of the BSC signal.

20. A communication apparatus, wherein the communication apparatus is a first communication apparatus, and the first communication apparatus comprises a receiving module and a processing module;
the receiving module is configured to: receive a first signal from a second communication apparatus, and receive a BSC signal from a third communication apparatus, wherein the BSC signal is obtained in a case that the third communication apparatus modulates the first signal; and
the processing module is configured to obtain target bits based on the first signal and the BSC signal received by the receiving module, wherein the target bits are respectively carried on the first signal and the BSC signal.

21. The communication apparatus according to claim 20, wherein the processing module is specifically configured to perform joint channel decoding on a first group of bits and a second group of bits, to obtain the target bits, and
after a fourth communication apparatus splits a first bit, the first group of bits and the second group of bits are sent to the second communication apparatus and the third communication apparatus respectively; and
the fourth communication apparatus comprises any one of the following: the second communication apparatus and another communication apparatus, and the first bit is a bit generated after channel coding is performed on the target bits.

22. The communication apparatus according to claim 20, wherein the processing module is specifically configured to: perform demodulation and channel decoding on the first signal respectively, to obtain a third group of bits; perform demodulation and channel decoding on the BSC signal respectively, to obtain a fourth group of bits; and obtain the target bits based on the third group of bits and the fourth group of bits, wherein
after a fourth communication apparatus splits the target bits, the third group of bits and the fourth group of bits are sent to the second communication apparatus and the third communication apparatus respectively; and
the fourth communication apparatus comprises any one of the following: the second communication apparatus and another communication apparatus.

23. The communication apparatus according to claim 22, wherein the third group of bits is data information, and the fourth group of bits is target control information.

24. The communication apparatus according to claim 23, wherein the target control information comprises at least one of the following:
ACK/NACK information; and
DCI corresponding to the data information.

25. The communication apparatus according to any one of claims 20 to 24, wherein a first corresponding relationship exists between sending time corresponding to the first signal and sending time corresponding to the BSC signal, and
the first corresponding relationship is specified by a protocol, or is configured by the second communication apparatus.

26. The communication apparatus according to claim 20, wherein the receiving module is further configured to: receive first control information from the second communication apparatus; or receive second control information from the second communication apparatus; and receive third control information from the third communication apparatus, and
the first control information indicates transmission parameters of the first signal and the BSC signal, the second control information indicates a transmission parameter of the first signal, and the third control information indicates a transmission parameter of the BSC signal.

27. The communication apparatus according to claim 26, wherein the transmission parameter comprises at least one of the following:
a time domain resource;
a frequency domain resource;
a modulation manner;
a coding manner;
a target time interval;
an information precoding manner;
an information splitting manner of a target group of bits;
a subframe or a symbol occupied by the first signal and the BSC signal;
target time information;
at least one cycle length of the BSC signal;
a symbol length of the BSC signal;
transmission duration of the BSC signal;
a length of a delimiter of the BSC signal;
a time offset of the delimiter;
a length of a preamble of the BSC signal;
a time offset of the preamble;
information synchronously related to the third communication apparatus;
information related to frequency shifting of the first signal by the third communication apparatus;
target duration; and
target sequence information, wherein
the target time interval indicates a time interval between sending time of the control information and corresponding sending time of the bit;
the target group of bits is a first group of bits and a second group of bits, or a third group of bits and a fourth group of bits;
the target time information indicates time information of the BSC signal sent by the third communication apparatus;
the delimiter indicates a starting moment of the BSC signal;
the target duration is minimum duration in which an amplitude and a phase of the BSC signal remain unchanged; and
the target sequence information is associated with an identifier of the third communication apparatus, or is associated with a scrambling sequence of the BSC signal.

28. The communication apparatus according to claim 27, wherein the target time information comprises any one of the following:
first time information; and
second time information, wherein
the first time information comprises at least one of aperiodic transmission mode information and aperiodic transmission time information; and
the second time information comprises at least one of periodic transmission mode information, a transmission cycle, and periodic transmission time information.

29. The communication apparatus according to claim 27, wherein the information synchronously related to the third communication apparatus comprises at least one of the following:
a starting moment of a symbol or a slot of the BSC signal; and
deviation information between definite time and target definite time of the third communication apparatus, wherein
the target definite time comprises any one of the following: definite time of the first signal and definite time of the second communication apparatus.

30. The communication apparatus according to claim 27, wherein the information related to frequency shifting of the first signal by the third communication apparatus comprises at least one of the following:
whether frequency shifting is supported;
a center frequency point after a frequency point is moved; and
a bandwidth after the frequency point is moved.

31. A communication apparatus, wherein the communication apparatus is a second communication apparatus, and the second communication apparatus comprises a sending module, and
the sending module is configured to send a first signal to a first communication apparatus, wherein
the first signal is used by the first communication apparatus to obtain target bits; and
the target bits are carried on the first signal and a BSC signal respectively, and the BSC signal is obtained in a case that the second communication apparatus modulates the first signal.

32. The communication apparatus according to claim 31, wherein the target bits comprise a first group of bits;
the second communication apparatus further comprises an obtaining module and a processing module;
the obtaining module is configured to obtain the first group of bits; and
the processing module is configured to modulate, on the first signal, the first group of bits obtained by the obtaining module, wherein
the first group of bits is obtained after a fourth communication apparatus splits a first bit; and
the fourth communication apparatus comprises any one of the following: the second communication apparatus and another communication apparatus, and the first bit is a bit generated after channel coding is performed on the target bits.

33. The communication apparatus according to claim 31, wherein the target bits comprise a third group of bits;
the second communication apparatus further comprises an obtaining module;
the obtaining module is configured to obtain the third group of bits; and
a processing module is further configured to: perform channel coding on the third group of bits obtained by the obtaining module; and modulate, on the first signal, a bit generated after channel coding, wherein
the third group of bits is obtained after a fourth communication apparatus splits the target bits; and
the fourth communication apparatus comprises any one of the following: the second communication apparatus and another communication apparatus.

34. The communication apparatus according to claim 31, wherein the sending module is further configured to send first control information to the first communication apparatus, or send second control information to the first communication apparatus, wherein
the first control information indicates transmission parameters of the first signal and the BSC signal, and the second control information indicates a transmission parameter of the first signal.

35. A communication apparatus, wherein the communication apparatus is a third communication apparatus, and the third communication apparatus comprises a sending module, and
the sending module is configured to send a BSC signal to a first communication apparatus, wherein
the BSC signal is used by the first communication apparatus to obtain target bits; and
the target bits are carried on a first signal and the BSC signal respectively, the first signal is a signal sent by a second communication apparatus to the first communication apparatus, and the BSC signal is obtained in a case that the third communication apparatus modulates the first signal.

36. The communication apparatus according to claim 35, wherein the target bits comprise a second group of bits;
the third communication apparatus further comprises an obtaining module and a processing module;
the obtaining module is configured to obtain the second group of bits; and
the processing module is configured to modulate, on the first signal, the second group of bits obtained by the obtaining module, to generate the BSC signal, wherein
the second group of bits is obtained after a fourth communication apparatus splits a first bit; and
the fourth communication apparatus comprises any one of the following: the second communication apparatus and another communication apparatus, and the first bit is a bit generated after channel coding is performed on the target bits.

37. The communication apparatus according to claim 35, wherein the target bits comprise a fourth group of bits;
the third communication apparatus further comprises an obtaining module and a processing module;
the obtaining module is configured to obtain the fourth group of bits; and
a processing module is configured to: perform channel coding on the fourth group of bits obtained by the obtaining module; and modulate, on the first signal, a bit generated after channel coding, to generate the BSC signal, wherein
the fourth group of bits is obtained after a fourth communication apparatus splits the target bits; and
the fourth communication apparatus comprises any one of the following: the second communication apparatus and another communication apparatus.

38. The communication apparatus according to claim 35, wherein the sending module is further configured to send third control information to the first communication apparatus, wherein
the third control information indicates a transmission parameter of the BSC signal.

39. A terminal, comprising a processor and a memory, wherein the memory stores a program or instructions executable on the processor, and when the program or instructions are executed by the processor, steps of the communication method according to any one of claims 1 to 11 are implemented, or steps of the communication method according to any one of claims 16 to 19 are implemented.

40. A network side device, comprising a processor and a memory, wherein the memory stores a program or instructions executable on the processor, and when the program or instructions are executed by the processor, steps of the communication method according to any one of claims 12 to 15 are implemented.

41. A readable storage medium, wherein the readable storage medium stores a program or instructions, and when the program or instructions are executed by a processor, the communication method according to any one of claims 1 to 19 is implemented.
